# EUROPEAN PATENT APPLICATION

(11) **EP 4 723 397 A1**
(43) Date of publication of application: **08.04.2026**
(21) Application number: 24204986.4
(22) Date of filing: 07.10.2024
(51) Int. Cl.: H01R 24/78, H01R 25/00, H01R 13/514

(54) **ELECTRICAL OUTLET WITH FOOLPROOF CONNECTION TO MAINS**

(71) Applicant: ABB SCHWEIZ AG, 5400 Baden (CH)
(72) Inventor: VAN DER AA, Bert Johannes Gerhardus, 4825 BZ Breda (NL); PAAUWEN, Lauran, 3741EK Baarn (NL)
(74) Representative: Maiwald GmbH

(57) **Abstract**

An electrical outlet (1), comprising
- A body comprising
o an electrical switch, and/or
o a receptacle (2) for receiving a plug from an electrical consumer,

and further comprising at least one input port (3) for connecting the electrical outlet (1) to an electrical mains of an electrical installation, wherein the at least one input port (3) is configured to mate with a corresponding connector (4a, 4b) that supplies power from said electrical mains, wherein the at least one input port (3) is arranged on the body.

A cable (5) for supplying power from the electrical mains of an electrical installation to the electrical outlet (1) of any one of claims 1 to 14, comprising one end that is connectable to the electrical mains and one end with a connector (4a) corresponding to the at least one input port (3) of the electrical outlet (1).

## Description

### FIELD OF THE INVENTION

The invention relates to electrical outlets, such as socket outlets or switches, that are used to connect electrical consumers, such as pluggable household appliances, USB devices or lighting, to the electrical mains of a building.

### BACKGROUND

Pluggable electrical household appliances are connected to the electrical mains of a building via socket outlets. Some socket outlets also have a built-in power supply for low-voltage pluggable devices, such as USB devices. Likewise, lighting devices are connected to the electrical mains via switches as another form of electrical outlet. All these electrical outlets are typically installed by feeding a live wire, a neutral wire and a protective earth wire coming from the mains installation of the building into respective terminals of the electrical outlet and fastening them in these terminals by means of a screw.

This installation must be professionally performed by a licensed electrician for safety reasons because mistakes can have dangerous consequences. For example, if the protective earth connector of a socket outlet is not connected to earth, then the protection that it is meant to provide against faults in appliances vanishes. Even worse, if the phase and protective earth leads are switched around, this causes the protective earth contacts, and any touchable metal parts of appliances connected to it, to be energized to mains voltage. Also, if the wiring is in principle correct, but the screwed connection is too loose and the electrical contact is not good, an increased resistance of this contact may heat up when the outlet is at a high load for an extended period of time, potentially up to the point where it causes a fire.

However, skilled electrician labour is a scarce resource. In particular, if multiple visits of the electrician are needed, this is hard to coordinate with other work on the building.

### OBJECTIVE OF THE INVENTION

It is therefore an objective of the invention to provide an electrical outlet that is connectable to an electrical mains with a lesser need for skilled work of a licensed electrician, and with a better protection against common installation mistakes.

This objective is achieved by an electrical outlet according to a first independent claim and by a corresponding cable according to a second independent claim. Further advantageous embodiments are detailed in the dependent claims.

### DISCLOSURE OF THE INVENTION

The invention provides an electrical outlet. This electrical outlet comprises a body housing an electrical switch, and/or a receptacle for receiving a plug from an electrical consumer. For example, a switch may control a lighting device. Electrical consumers that are pluggable to the receptacle may, for example, include household appliances that consume mains voltage, but also low-voltage devices (such as smartphones, laptops, tablets or other USB devices) that are connected to a transformer or a step-down power supply built into the electrical outlet.

The electrical outlet further comprises at least one input port for connecting the electrical outlet to an electrical mains. This electrical mains may be the electrical mains of a building, but also the electrical mains of a cabin, a ship or any other electrical installation or place with an electrical installation. Thus, the term "mains" merely denotes that such an electrical installation, or a part thereof, is energized from some central supply. The input port is configured to mate with a connector that supplies power from the electrical mains. The input port is arranged on the body. In particular, the input port can form an integral part of the body of the electrical outlet. For example the input port can be arranged on a side of the body of the electrical outlet. Such an arrangement of the input port enables an easy coupling to any output port of neighbouring electrical outlets or to cables.

The mains is not a mandatory part of the electrical outlet. To use the electrical outlet and any consumers connected to the electrical outlet, the mains will be needed. But the ease and safety of installation are also present in a state where the electrical outlet is not yet connected to, or energized from, the mains.

In particular, the at least one input port may comprise all the wires required for operating the electrical outlet. In particular, the at least one input port may then be configured to be mated with the corresponding connector in one action. That is, it is no longer necessary to handle the different wires that are required for operating the electrical outlet one by one.

In this manner, it can be guaranteed that all required connections between the electrical outlet on the one hand and the electrical mains on the other hand are made and that each connection is made to the respective correct element of the electrical outlet. For example, if the input port is configured to accept one single connector, mating this one single connector with the input port will make all required connections and guarantee that no connections are switched around. Also, the mating between the connector and the input port can be configured to provide an unequivocal feedback as to whether the connection is firm. For example, mating the connector with the input port may provide a visual feedback or a haptic feedback (such as a click or latching) indicating that the connector is inserted correctly. By contrast, there is no unequivocal feedback when a wire is screwed into a terminal. When the screw can be tightened no further, this is not necessarily an optimal connection. Rather, the screw may already have been tightened to the point where the wire has been forced flat or is even close to breaking, so that there is an increased contact resistance.

In a particularly advantageous embodiment, the at least one input port is configured to mate with a connector that is attached to a cable configured to supply power from the electrical mains. This greatly reduces the work that must be performed by a skilled electrician. The cable can be configured such that it may be laid in place by anybody even without official electrical skills. Also, the connector may be mated with the input port (e.g., by plugging in) by anybody as well in a foolproof manner without having to fear any mistakes. The only task that still needs to be performed by a licensed electrician is to connect all the cables to their respective circuit breakers in the electrical sub-distribution. That is, there is only one visit of the skilled electrician required, instead of multiple visits.

In a further particularly advantageous embodiment, the electrical outlet further comprises fastening means for fastening the cable to the electrical outlet. These fastening means serve as a strain relief, so as to keep a mechanical pull on the cable from exerting a force that separates the connector from the at least one input port. That is, the force of the pull will be absorbed or at least deflected by the fastening means, so that it does not reach the connector. In this manner, the electrical connection of the electrical outlet to the mains of the building remains safe during further handling of the electrical outlet and/or of the cable after attachment of the connector to the input port. Such further handling may, e.g., be required for mounting the electrical outlet into a recess in a wall, or for guiding the other end of the cable to the sub-distribution for connection to the electrical mains.

In particular, the fastening means may be configured to guide the cable into a direction that has an angle between 60 and 120 degrees with a direction of insertion of the connector into the at least one input port. In particular, the direction in which the cable is guided may be substantially orthogonal to the direction of insertion of the connector. This deflects a pulling force on the cable such that it is absorbed by the fastening means and does not reach the connector. Of course, it is also possible to have a connection with any other angle between the direction of insertion and the direction in which the cable is guided. For example, for a first electrical outlet in arrangement of electrical outlets with the input port placed at the back, the angle may be 0.

In one example, the fastening means may comprise at least one clamp on a back side of the electrical outlet that, when the electrical outlet is mounted to a wall, is facing this wall. In particular, the clamp may be an elastic or spring-loaded clamp that can be opened by pushing against it, so that the cable may be inserted into it without requiring the use of a tool.

In a further particularly advantageous embodiment, the electrical outlet further comprises an output port that is electrically connected to the input port of this electrical outlet and configured to mate as a connector with the input port of another electrical outlet. In particular, the electrical connection between the input port and the output port may run entirely within the electrical outlet. By means of the output port, power may be provided to further electrical outlets. That is, an arbitrary number of electrical outlets may be connected together, so that they can all be supplied with power with one single connection to the electrical mains. It should be noted that this is not a daisy-chain in the strict electrical sense because each electrical outlet will be connected individually to the full mains voltage. That is, even if the physical connection passes from one electrical outlet to the next, the electrical outlets are still connected to the electrical mains in a parallel arrangement.

To facilitate said connecting of electrical outlets, advantageously, the input port of one electrical outlet may be configured to mate with an output port of another electrical outlet as the connector. In particular, the input port, the output port and a connector attached to a cable may be configured such that the user is free to connect the input port either to the output port of another electrical outlet or to the connector attached to a cable; that is, the input port will fit either of the two. In this manner, only one type of electrical outlet is needed, no matter whether only one single outlet or a plurality of electrical outlets is to be installed. But of course, it remains possible to connect electrical outlets of different types together, i.e., to form an arrangement where a plurality of socket outlets and a plurality of switches for lighting devices are all connected together, with only one single connection of the whole arrangement to the electrical mains.

In a further particularly advantageous embodiment, at least one input port is configured to mechanically engage with the connector, such that there is an electrical connection between the connector and the at least one input port in the engaged state. In this manner, it may be ensured that, if there is an electrical connection, it is a good connection without an overly high contact resistance that might heat up under a high load. Exemplary ways of accomplishing mechanical engagement include sliding, pushing, clicking and/or rotating of the connector relative to the at least one input port. These manners may provide haptic stops, and/or acoustic cues, as feedback that the engagement has been completed.

In a further particularly advantageous embodiment, the at least one input port is configured to participate in the applying of a holding force between the at least one input port and the connector in the mechanically engaged state. In this manner, the holding force can actively ensure that the electrical connection is always good and has a low contact resistance, so as to prevent overheating under load.

To this end, in particular, the at least one input port may be configured to break electrical contact with the connector in a state where the holding force is not active. That is, no electrical contact is better than a poor electrical contact.

In a further particularly advantageous embodiment, the at least one input port is configured to:
- when being brought into mechanical engagement with the connector, establish electrical connection between a protective earth contact of the connector and a protective earth contact of the at least one input port first, and
- when being brought out of mechanical engagement with the connector, break electrical connection between a protective earth lead of the connector and a protective earth contact of the at least one input port last.

This adds an additional layer of safety because the protection afforded by the protective earth lead is present before an electrical consumer connected to the electrical outlet is energized. That is, if there should be a fault from a live wire to touchable parts in this electrical consumer, it is ensured that the charge will immediately come off this touchable part and the part will remain safe to touch.

In a further particularly advantageous embodiment, the at least one input port comprises a receptacle that is configured to accept a plug as connector. This plug is connectable to the at least one input port by pushing it towards the at least one input port. The plug may, for example, be mounted at the end of a cable supplying power from the electrical mains, or it may be integrated into the output port of another electrical outlet. In particular, the plug (or another type of connector) may be configured to fit to the input port in one orientation only, so that the plug cannot be inserted into the input port the wrong way.

Herein, the terms "receptacle" and "connector" are not to be construed limiting regarding which of these entities is a "male" part of the connection with pins or the like and which of these entities is a "female" part of the connection where the pins or the like are to be inserted. That is, it is equally possible and feasible that
- the at least one input port comprises a female connector as receptacle that is configured to accept a male connector, wherein this male connector is connectable to the at least one input port by pushing it towards the at least one input port; or
- the at least one input port comprises a male connector as receptacle that is configured to accept a female connector, wherein this female connector is connectable to the at least one input port by pushing it towards the at least one input port.

In a further particularly advantageous embodiment, the at least one input port is configured to mechanically engage with the connector by snapping. In particular, such snapping may be effected by latching. In this manner, the connector may be brought into an engaged state with the input port simply by bringing the connector and the input port together (e.g., by inserting the connector into the input port), and this engaged state may be locked without a tool. But to disengage the connector from the input port, the further action of opening the snapping mechanism is required. In particular, a same or similar snapping mechanism may be used to latch either a plug on a cable, or an output port of another electrical outlet, to the input port.

The invention also provides an electrical cable for supplying power from the electrical mains of an electrical installation to the electrical outlet described above. One end of this cable is connectable to the electrical mains, e.g., to a circuit breaker or fuse in a sub-distribution. One end has a connector corresponding to the at least one input port of the electrical outlet. In this manner, as discussed above, the cable may be laid into walls and also connected to an electrical outlet by personnel that is not electrically skilled. Only the connection to the sub-distribution needs to be performed by a licensed electrician.

The invention also provides an electrical outlet. This electrical outlet comprises an electrical switch, and/or a receptacle for receiving a plug from an electrical consumer. For example, a switch may control a lighting device. Electrical consumers that are pluggable to the receptacle may, for example, include household appliances that consume mains voltage, but also low-voltage devices (such as smartphones, laptops, tablets or other USB devices) that are connected to a transformer or a step-down power supply built into the electrical outlet.

The electrical outlet further comprises at least one interconnect port. This interconnect port is configured to connect to a corresponding interconnect port of a further electrical outlet, so as to provide a mechanical connection between the two electrical outlets.

In this manner, installations comprising an arbitrary number of electrical outlets may be assembled much quicker. No matter whether one, two, three or more electrical outlets are to be combined, the basic component can be always the same individual electrical outlet. Thus, there is no need to obtain a wide variety of different parts. The assembling may even be performed without the use of tools, e.g., just by clicking the electrical outlets together.

Moreover, there is more flexibility to combine different types of electrical outlets. For example, an array of socket outlets may be combined with one or more switches for lighting in the same manner, by clicking them all together.

Finally, there is also no need to fix the electrical outlet to a wall box before mechanically connecting the electrical outlet to an adjacent electrical outlet. This saves further installation time and therefore money.

In a particularly advantageous embodiment, the electrical outlet further comprises at least one electrical input port that is configured to a corresponding output port of the further electrical outlet. In this manner, both the mechanical and the electrical connection of the two outlets may be accomplished with one single action, e.g., sliding or clicking the two electrical outlets together. This saves time during assembling and eliminates a potential for error because there is only one way to fit the two electrical outlets together. The electrical outlets cannot be mounted together the wrong way. Since there is no way to get the electrical connection wrong, the connection may also be made by people without official electrician skills.

In particular, the input port may comprise all the wires required for operating the electrical outlet. In particular, the input port may then be configured to be mated with the corresponding output port in one action. That is, it is no longer necessary to handle the different wires that are required for operating the electrical outlet one by one.

In particular, the output port of the electrical outlet may be configured so that it is safe to the touch when the input port is energized. This means that, from the outside, it is not possible to reach/touch electrically conductive elements with a finger without using a tool. That is, only a matching input port of another electrical outlet may get access to the electrical contacts of the output port, whereas fingers or other body parts are prevented from reaching the electrical contacts of the output port. In this manner, it also becomes feasible to add a further electrical outlet to the assembly when the assembly is already energized. Means that provide safety to the touch may, for example, include protective insulating elements such as plastic pads on the connectors, or other obstacles that prevent fingers or the like from reaching any electrical contacts.

To this end, in one example, the output port may comprise one or more electrical contacts that are recessed with respect to a surface of the electrical outlet, and/or are behind a cover that is configured to open when the electrical outlet is connected to the further electrical outlet.

In a particularly advantageous embodiment, the input port, and/or the output port, is surrounded by at least one interconnect port. This serves to protect the input port, and/or the output port, from damage, from the ingress of fluids or dirt, and also from the touch.

In a further particularly advantageous embodiment, the electrical outlet further comprises an output port that is electrically connected within the electrical outlet to the electrical input port of this electrical outlet. In this manner, based on one single connection of one electrical outlet to the electrical mains of an electrical installation, a whole assembly of multiple electrical outlets may be energized. It should be noted that this is not a daisy-chain in the strict electrical sense because each electrical outlet will be connected individually to the full mains voltage. That is, even if the physical connection passes from one electrical outlet to the next, the electrical outlets are still connected to the electrical mains in a parallel arrangement. The only limitation to the energizing with one single connection to the mains is that the total load must not exceed the load limit of the first electrical outlet in the arrangement.

In a further particularly advantageous embodiment, the electrical input port is further configured to connect to a connector on a cable supplying power from the electrical means of an electrical installation. In this manner, the electrical outlet that is energized from the cable can be of the same type as the other electrical outlets in the arrangement that pass on the power among them. There is no need for a special type of electrical outlet for the sake of connection to the mains. The electrical mains may be the mains of a building, a cabin, a ship or any other electrical installation or place with an electrical installation. Thus, the term "mains" merely denotes that such an electrical installation, or a part thereof, is energized from some central supply.

The mains is not a mandatory part of the electrical outlet. To use the electrical outlet and any consumers connected to the electrical outlet, the mains will be needed. But the ease and safety of installation are also present in a state where the electrical outlet is not yet connected to, or energized from, the mains.

In a further particularly advantageous embodiment, wherein the at least one interconnect port is configured to connect to the corresponding interconnect port by mechanical engagement. Mechanical engagement means that the two interconnect ports are brought into a state that limits a relative movement between these two interconnect ports. In this manner, an unwanted detaching of the two interconnect ports from one another is impeded in the sense that a particular movement, and/or the applying of a certain force, is required to undo the mechanical engagement and purposefully detach the two interconnect ports from one another. For example, a first fixture as a first interconnect port may be slided into a corresponding second fixture as the second interconnect port, so that the two interconnect ports are now mechanically engaged. To dis-engage the two interconnect ports, the first interconnect port needs to be slided out of the second one in the opposite direction. Other types of movement, such as pulling in a direction normal to the direction of the sliding, will not separate the two interconnect ports from one another.

In a further particularly advantageous embodiment, the electrical input port is configured to be connected to the corresponding output port of the further electrical outlet if and only if the at least one interconnect port is mechanically engaged with the corresponding interconnect port of the further electrical outlet. In this manner, it is ensured that the electrical connection between the two electrical outlets, if it exists, is always a good one. That is, there is no loose connection that might exhibit a large contact resistance. Such a large contact resistance may overheat under a high electrical load, potentially causing a fire. In this respect, the previous connection of wires to terminals with screws has disadvantages. There is no unequivocal way of telling whether the force with which the screws are tightened is optimal. If the screw can be tightened no more, the applied force on the wire may already be too high.

In a further particularly advantageous embodiment, the at least one input port is configured to: when the interconnect port is being brought into mechanical engagement with the corresponding interconnect port, establish electrical connection between a protective earth contact of the output port and a protective earth contact of the input port first. Likewise, when the interconnect port is being brought out of mechanical engagement with the corresponding interconnect port, the electrical connection between a protective earth lead of the output port and a protective earth contact of the input port is broken last.

This adds an additional layer of safety because the protection afforded by the protective earth lead is present before an electrical consumer connected to the electrical outlet is energized. That is, if there should be a fault from a live wire to touchable parts in this electrical consumer, it is ensured that the charge will immediately come off this touchable part and the part will remain safe to touch.

In a further particularly advantageous embodiment, the at least one interconnect port is configured to mechanically engage with the corresponding interconnect port by sliding, pushing, clicking and/or rotating of the two electrical outlets with the interconnect ports relative to one another. These manners may provide haptic stops, and/or acoustic cues, as feedback that the engagement has been completed. Also, these are motions that can be accomplished without requiring the use of a tool.

In particular, the at least one interconnect port may be configured to mechanically engage with the corresponding interconnect port by sliding the interconnect port into the corresponding interconnect port in a direction normal to a front surface of the electrical outlet. The front surface is the surface of the electrical outlet that remains visible and accessible to a user of the electrical outlet even if the electrical outlet is mounted in a recess in a wall. It is the surface on which the user interacts with the electrical outlet when using it in its installed state, e.g., by inserting the plug of an appliance into the receptacle, or pushing an electrical switch. In this manner, the connection is made more resistant against the kind of movement that occurs when handling the assembly of multiple electrical outlets on the construction site.

In a further particularly advantageous embodiment, the at least one interconnect port is configured to snap, e.g., to latch, to the corresponding interconnect port, or vice versa. In this manner, a secure connection of the two interconnect port may be achieved without requiring the use of a tool, but also without a risk of the interconnect ports spontaneously detaching from one another. To disengage the two interconnect ports from one another, the additional action of opening the snapping mechanism is required. The snapping mechanism can be designed such that this opening action is unlikely to be performed by accident.

In a further particularly advantageous embodiment, the at least one interconnect port is configured to participate in the applying of a holding force between this interconnect port and the corresponding interconnect port of the other electrical outlet in the mechanically engaged state. In particular, this holding force may be further configured to push the electrical input port and the corresponding electrical output port of the other electrical outlet together, so as to ensure that there is always a good contact.

To this end, in a further particularly advantageous embodiment, the electrical outlet is configured to break the electrical connection between the input port and the output port in a state where the holding force is not active. Because a loose contact may exhibit a high contact resistance that may overheat under a high load, no contact is better than a poor contact.

The disclosure of the present invention also includes the following Examples:
Example 1: An electrical outlet, comprising
   - an electrical switch, and/or
   - a receptacle for receiving a plug from an electrical consumer,
   and further comprising at least one interconnect port that is configured to connect to a corresponding interconnect port of a further electrical outlet, so as to provide a mechanical connection between the two electrical outlets.
Example 2: The electrical outlet of Example 1, further comprising at least one electrical input port that is configured to connect to a corresponding output port of the further electrical outlet.
Example 3: The electrical outlet of Example 2, wherein the output port is safe to the touch when the input port is energized.
Example 4: The electrical outlet of any one of Examples 2 to 3, wherein the output port comprises one or more electrical contacts that are recessed with respect to a surface of the electrical outlet, and/or behind a cover that is configured to open when the electrical outlet is connected to the further electrical outlet.
Example 5: The electrical outlet of any one of Examples 2 to 4, wherein the at least one electrical input port, and/or the output port, is surrounded by at least one interconnect port.
Example 6: The electrical outlet of any one of Examples 2 to 5, further comprising an output port that is electrically connected within the electrical outlet to the at least one electrical input port of this electrical outlet.
Example 7: The electrical outlet of any one of Examples 2 to 6, wherein the at least one electrical input port is further configured to connect to a connector on a cable supplying power from the electrical mains of an electrical installation.
Example 8: The electrical outlet of any one of Examples 1 to 7, wherein the at least one interconnect port is configured to connect to the corresponding interconnect port by mechanical engagement.
Example 9: The electrical outlet of Example 8 and any one of Examples 2 to 7, wherein the at least one electrical input port is configured to be connected to the corresponding output port of the further electrical outlet if and only if the at least one interconnect port is mechanically engaged with the corresponding interconnect port of the further electrical outlet.
Example 10: The electrical outlet of Example 9, wherein the at least one electrical input port is configured to:
   - when the interconnect port is being brought into mechanical engagement with the corresponding interconnect port, establish electrical connection between a protective earth contact of the output port and a protective earth contact of the at least one electrical input port first, and
   - when the interconnect port is being brought out of mechanical engagement with the corresponding interconnect port, break electrical connection between a protective earth lead of the output port and a protective earth contact of the at least one electrical input port last.
Example 11: The electrical outlet of any one of Examples 8 to 10, wherein the at least one interconnect port is configured to mechanically engage with the corresponding interconnect port by sliding, pushing, clicking and/or rotating of the two electrical outlets with the interconnect ports relative to one another.
Example 12: The electrical outlet of Example 11, wherein the at least one interconnect port is configured to mechanically engage with the corresponding interconnect port by sliding the interconnect port into the corresponding interconnect port in a direction normal to a front surface of the electrical outlet.
Example 13: The electrical outlet of any one of Examples 8 to 12, wherein the at least one interconnect port is configured to snap to the corresponding interconnect port, or vice versa.
Example 14: The electrical outlet of any one of Examples 8 to 13, wherein the at least one interconnect port is configured to participate in the applying of a holding force between this interconnect port and the corresponding interconnect port of the other electrical outlet in the mechanically engaged state.
Example 15: The electrical outlet of Examples 8, 9 and 14, configured to break the electrical connection between the at least one electrical input port and the output port in a state where the holding force is not active.

### DESCRIPTION OF THE FIGURES

In the following, the invention is illustrated using Figures without any intention to limit the scope of the invention. The Figures show:
Figure 1: Illustration of two electrical outlets 1, 1', energized from the electrical mains through a cable 5 with a connector 4a that is plugged into an input port 3 of the electrical outlet 1;
Figure 2: Illustration of how the two electrical outlets 1, 1' are coupled together mechanically and electrically by sliding them together;
Figure 3: Securing of the cable 5 on the electrical outlets 1, 1' by a clamp 6;
Figure 4: Exploded view of an electrical outlet 1.

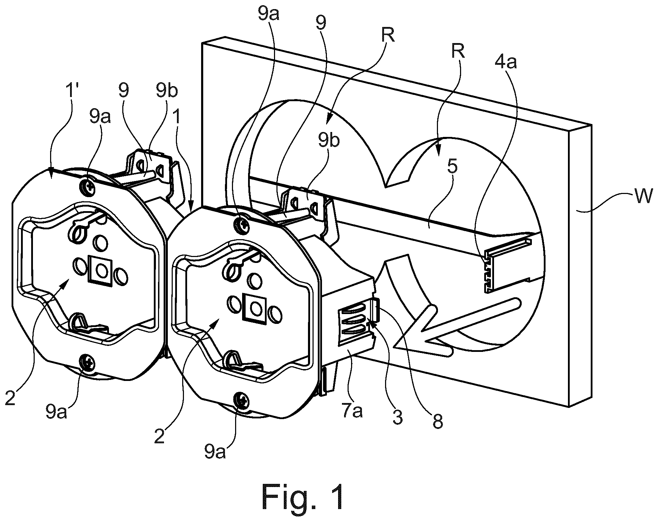

Figure 1 is a schematic illustration of two electrical outlets 1, 1'. These electrical outlets 1, 1' have receptacles 2 for receiving a plug of a household appliance that runs on mains power. In the situation shown in Figure 1, these two electrical outlets 1, 1' are coupled together mechanically and electrically through respective coupling mechanisms.

Both electrical outlets 1, 1' are energized from an electrical mains by virtue of a cable 5 supplying power from the mains. The cable 5 has a connector 4a that is plugged into an input port 3 of the electrical outlet 1. The electrical outlet 1' has an input port 3 of the same kind that is connected to an output port 4b of the electrical outlet 1. The output port 4b of the electrical outlet 1 and the input port 3 of the electrical outlet 1' are not visible from the outside in the state shown in Figure 1 and are therefore not shown in Figure 1.

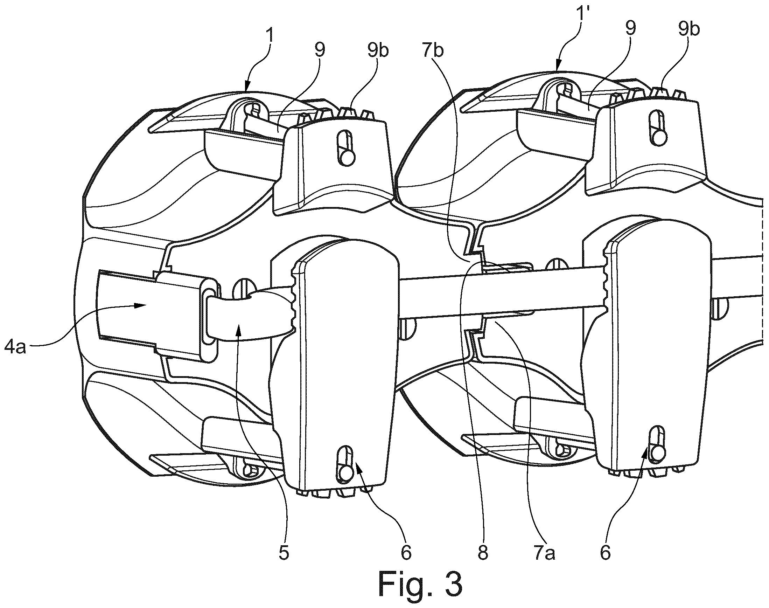

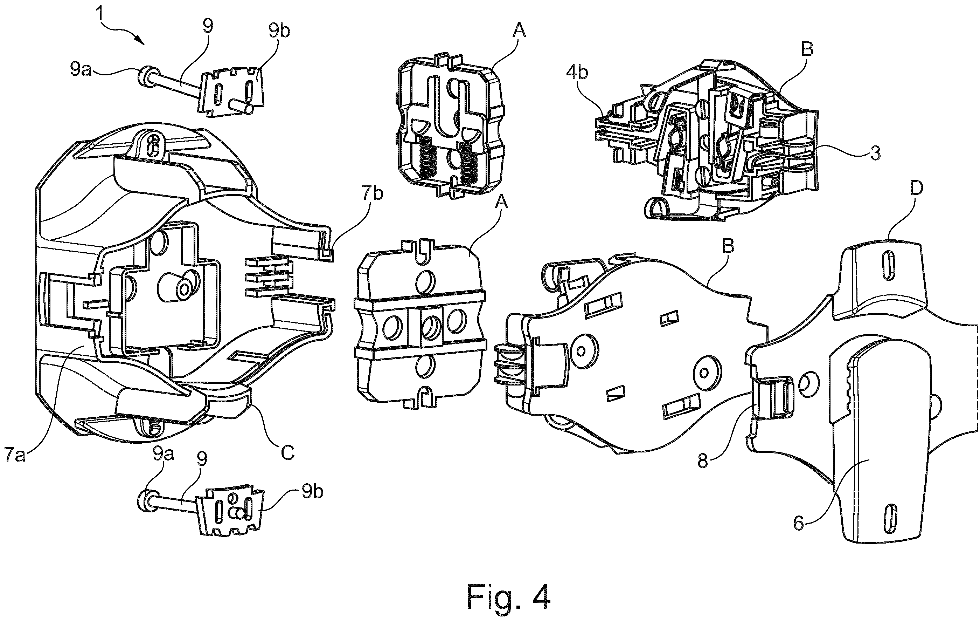

On the electrical outlet 1, a mechanical interconnect port 7a with a snapping mechanism 8 is visible. This mechanical interconnect port 7a is configured to be engaged with a corresponding mechanical interconnect port 7b of another electrical outlet, so that the snapping mechanism 8 then engages with that other electrical outlet and holds the two firmly together. The electrical outlet 1' has a mechanical interconnect port 7a as well, and this is engaged with a mechanical interconnect port 7b of the electrical outlet 1. But this is not visible in the perspective of Figure 1 and therefore not shown in Figure 1. In Figure 3 and in the exploded view of Figure 4, more details about the mechanical interconnect ports 7a and 7b are visible.

The electrical outlets 1 and 1' have mechanical fixing means 9 that comprise a screw 9a and a claw 9b. By tightening the screw 9a, the claw 9b is driven to extend outwards, so as to fix the electrical outlet 1, 1' in a recess R (such as a drilled hole) in a wall W.

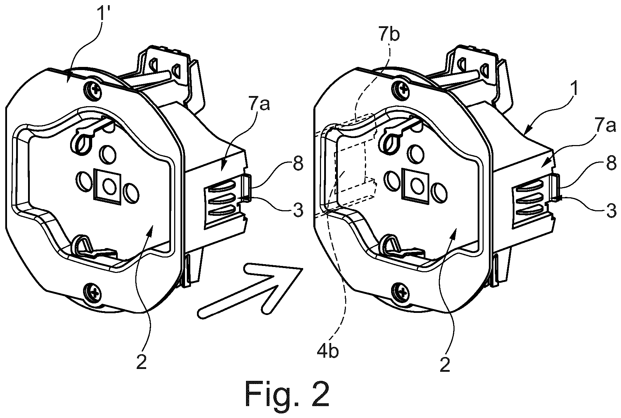

Figure 2 illustrates how the two electrical outlets 1 and 1' are mounted together. The electrical outlet 1' is slided against the electrical outlet 1. This causes the mechanical interconnect port 7a of the electrical outlet 1' to engage with the corresponding mechanical interconnect port 7b of the electrical outlet 1. The snapping mechanism 8 of the electrical outlet 1' then engages with the electrical outlet 1 and holds both electrical outlets 1 and 1' firmly together. At the same time, the electrical output port 4b of the electrical outlet 1 engages with the electrical input port 3 of the electrical outlet 1'. The two electrical outlets 1 and 1' may be engaged with one another without a tool, but to dis-engage them from one another, a tool may be needed to unlock the snapping mechanism 8. Usually, there is no need for such dis-engaging; once it has been decided that the electrical outlets 1 and 1' shall be mounted together, this decision is permanent.

The mechanical interconnect port 7a surrounds the input port 3. Likewise, the mechanical interconnect port 7b surrounds the output port 4b. This affords additional protection against the touching of any electrical contacts.

Figure 3 shows another view of the back side of the electrical outlets 1 and 1'. In the assembled and mounted state, this back side is facing the wall W. The cable 5 with the connector 4a that supplies power from the electrical mains is secured against the electrical outlets 1 and 1' by clamps 6. These clamps 6 both absorb and deflect a pull on the cable 5, so as to prevent that the connection between the connector plug 4a and the input port 3 is pulled out. Behind the cable 5, the corresponding mechanical interconnect ports 7a and 7b of the electrical outlets 1' and 1, as well as the snapping mechanism 8 of the electrical outlet 1', are visible.

Figure 4 shows an exploded view of an electrical outlet 1. A base body C carries mechanical interconnect ports 7a and 7b and has a central cavity in which parts A and B may be inserted. The cavity may then be closed with the lid D. Part B contains the electrical input port 3 and the electrical output port 4b. The electrical contacts for a household appliance are energized from the electrical input port 3. Also, there is a direct connection from the input port 3 to the output port 4b for energizing other electrical outlets 1. The input port 3 is configured to have protruding pins as contacts, whereas the output port 4b is configured to have recessed contacts that accept the protruding pins for making a connection. The parts A and B are shown in Figure 4 from two different perspectives in order to show more features than are visible from only one single perspective. The lid D contains the snapping mechanism 8, as well as the clamp 6 for attaching the cable 5. With the mechanical fixing means 9, the electrical outlet as a whole may be fixed in a recess R of a wall W.

In Figure 4, the body of the electrical outlet 1 that houses the electrical receptacle is sub-divided into multiple parts, namely the base body C, the inserts A and B, and the lid D. In the assembled state of the body, where the inserts A and B are inside the base body C and the base body C is closed with the lid D, the electrical input port 3 on the insert B fits into a corresponding recess in the wall of the base body C and is thereby arranged on the assembled body as a whole.

### List of reference signs:

- 1, 1': electrical outlet
- 2: receptacle for receiving plug from electrical consumer
- 3: electrical input port of electrical outlet 1
- 4a, 4b: connector for mating with input port 3
- 4a: plug on cable 5 as connector
- 4b: electrical output port of electrical outlet 1, 1' as connector
- 5: cable for energizing electrical outlet 1, 1' from mains
- 6: fixing means for cable 5
- 7a, 7b: mechanical interconnect ports for connection to other outlet 1, 1'
- 8: snapping mechanism
- 9: fixing means for fixing electrical outlet 1, 1' to wall W
- 9a: screw of fixing mechanism 9
- 9b: claw of fixing mechanism 9
- A, B: parts of electrical outlet 1 to be inserted into central cavity of part C
- C: base body part of electrical outlet 1 with central cavity
- D: lid of electrical outlet 1
- R: recess in wall W
- W: wall for mounting electrical outlet 1, 1'

## Claims

1. An electrical outlet (1), comprising a body housing
∘ an electrical switch, and/or
∘ a receptacle (2) for receiving a plug from an electrical consumer, and further comprising at least one input port (3) for connecting the electrical outlet (1) to an electrical mains of an electrical installation, wherein the at least one input port (3) is configured to mate with a corresponding connector (4a, 4b) that supplies power from said electrical mains, wherein the at least one input port is arranged on the body.

2. The electrical outlet (1) of claim 1, wherein the at least one input port (3) comprises all the wires required for operating the electrical outlet (1).

3. The electrical outlet (1) of claim 2, wherein the at least one input port (3) is configured to be mated with the corresponding connector (4a, 4b) in one action.

4. The electrical outlet (1) of any one of claims 1 to 3, wherein the at least one input port (3) is configured to mate with a connector (4a) that is attached to a cable (5) configured to supply power from the electrical mains.

5. The electrical outlet (1) of claim 4, further comprising fastening means (6) for fastening the cable (5) to the electrical outlet (1), so as to keep a mechanical pull on the cable (5) from exerting a force that separates the connector (4a) from the at least one input port (3).

6. The electrical outlet (1) of claim 5, wherein the fastening means (6) are configured to guide the cable (5) into a direction that has an angle between 60 and 120 degrees with a direction of insertion of the connector (4a, 4b) into the at least one input port (3).

7. The electrical outlet (1) of any one of claims 4 to 6, wherein the fastening means (6) comprise at least one clamp on a back side of the electrical outlet (1) that, when the electrical outlet (1) is mounted to a wall, is facing this wall.

8. The electrical outlet (1) of any one of claims 1 to 7, further comprising an output port (4b) that is electrically connected to the input port (3) of this electrical outlet (1) and configured to mate as a connector with the at least one input port (3) of another electrical outlet (1').

9. The electrical outlet (1) of any one of claims 1 to 8, wherein the at least one input port (3) is configured to mate with an output port (4b) of another electrical outlet (1') as the connector.

10. The electrical outlet (1) of any one of claims 1 to 9, wherein the at least one input port (3) is configured to mechanically engage with the connector (4a, 4b), such that there is an electrical connection between the connector (4a, 4b) and the at least one input port (3) in the engaged state.

11. The electrical outlet (1) of claim 10, wherein the at least one input port (3) is configured to mechanically engage with the connector (4a, 4b) by sliding, pushing, clicking and/or rotating of the connector relative to the at least one input port (3).

12. The electrical outlet (1) of any one of claims 10 to 11, wherein the at least one input port (3) is configured to participate in the applying of a holding force between the at least one input port (3) and the connector (4a, 4b) in the mechanically engaged state.

13. The electrical outlet (1) of claim 12, wherein the at least one input port (3) is configured to break electrical contact with the connector (4a, 4b) in a state where the holding force is not active.

14. The electrical outlet (1) of any one of claims 10 to 13, wherein the at least one input port (3) is configured to:
• when being brought into mechanical engagement with the connector (4a, 4b), establish electrical connection between a protective earth contact of the connector (4a, 4b) and a protective earth contact of the at least one input port (3) first, and
• when being brought out of mechanical engagement with the connector (4a, 4b), break electrical connection between a protective earth lead of the connector (4a, 4b) and a protective earth contact of the at least one input port (3) last.

15. The electrical outlet (1) of any one of claims 1 to 14, wherein the at least one input port (3) comprises a receptacle that is configured to accept a plug as connector (4a, 4b), wherein this plug is connectable to the at least one input port (3) by pushing it towards the at least one input port (3).

16. The electrical outlet (1) of any one of claims 1 to 15, wherein the at least one input port (3) is configured to mechanically engage with the connector (4a, 4b) by snapping.

17. A cable (5) for supplying power from an electrical mains of an electrical installation to the electrical outlet (1) of any one of claims 1 to 16, comprising one end that is connectable to the electrical mains and one end with a connector (4a) corresponding to the at least one input port (3) of the electrical outlet (1).
